# FASCICULE DE BREVET EUROPEEN

(11) **EP 3 646 196 B1**
(45) Date de publication et mention de la délivrance du brevet: **22.11.2023**
(21) Numéro de dépôt: 18748982.8
(22) Date de dépôt: 21.06.2018
(51) Int. Cl.: G06F 16/00

(54) **PROCÉDÉ ET DISPOSITIF DE TÉLÉCHARGEMENT DE CONTENU AUDIOVISUEL**
VERFAHREN UND VORRICHTUNG ZUM HERUNTERLADEN AUDIOVISUELLER INHALTE
METHOD AND DEVICE FOR DOWNLOADING AUDIOVISUAL CONTENT

(30) Priorité: 27.06.2017 FR 1755913
(43) Date de publication de la demande: 06.05.2020
(73) Titulaire: Orange, 92130 Issy-les-Moulineaux (FR)
(72) Inventeur: HOUZE, Patrice, 92326 Châtillon cedex (FR); MORY, Emmanuel, 92326 Châtillon cedex (FR); KERVADEC, Sylvain, 92326 Châtillon cedex (FR)
(74) Mandataire: Vidon Brevets & Stratégie
(86) Numéro de dépôt international: PCT/FR2018/051503
(87) Numéro de publication internationale: WO 2019/002729

(56) Documents cités:
- EP-A1- 2 537 340
- EP-A1- 2 953 319

## Description

### 1. Domaine de l'invention

L'invention concerne le téléchargement de contenus audiovisuels via un réseau de données, et plus particulièrement le téléchargement en "streaming" de tels contenus.

### 2. Art Antérieur

La diffusion de contenus audiovisuels en "streaming" sur un réseau de communication tel que l'Internet nécessite d'adapter le flux diffusé en fonction du débit ou de la bande passante disponible sur le réseau à un moment donné. Pour cela, une technique de diffusion en flux adaptatif dynamique basée sur le protocole HTTP (pour HyperText Transfer Protocol en anglais), permet de délivrer un contenu préparé selon différents flux de données ayant une qualité et un débit variable. Cette technique a été standardisée auprès de l'instance de standardisation ISO/IEC MPEG sous le nom MPEG-DASH (pour « Moving Picture Expert Group - Dynamic Adaptive Streaming over http » en anglais), mais d'autres solutions similaires existent, comme par exemple APPLE http Live Streaming, Microsoft Smooth Streaming ou Adobe http Dynamic Streaming. Chaque contenu est découpé en segments de courte durée, en général quelques secondes. L'organisation des segments et les paramètres associés aux segments sont publiés dans un fichier communément appelé manifeste. Ce fichier, au format XML (pour extensible Markup Language en anglais) s'appelle MPD pour Media Présentation Description selon le standard MPEG-DASH. D'autres formats peuvent être utilisés, comme par exemple le format texte pour une playlist (liste de lecture en français) conforme au protocole http live streaming décrit dans un draft (brouillon en français) IETF.

Par diffusion en "streaming", on entend ici la distribution d'un contenu téléchargé par un terminal et joué par le terminal au fur et à mesure de la réception des segments du contenu audiovisuel. Une telle technique est adaptée notamment pour la retransmission de flux vidéos en direct.

Lorsqu'un terminal équipé d'un client conforme au standard MPEG-DASH télécharge un contenu audiovisuel diffusé sur le réseau Internet, le terminal effectue typiquement une estimation de la bande passante disponible pour recevoir les segments du contenu audiovisuel et sélectionne le prochain segment à télécharger qui assure la meilleure qualité possible et un délai de réception du segment compatible avec le rendu ininterrompu du contenu audiovisuel.

La plupart des terminaux sont aujourd'hui équipés de plusieurs interfaces de communication, aussi appelées interfaces réseau par la suite, permettant au terminal d'établir des connexions avec un autre terminal ou un serveur via des interfaces réseau différentes. Par exemple, un terminal peut recevoir et émettre des données via une interface WIFI ou une interface 3G. De tels terminaux peuvent alors mettre en oeuvre, une technique dite MPTCP (pour Multi-Path Transport Control Protocol en anglais) qui permet d'échanger des données au cours d'une même session via différentes interfaces réseau en utilisant une connexion TCP sur plusieurs interfaces réseau entre les extrémités.

Selon cette technique dite MPTCP, le terminal qui échange des données avec un autre terminal ou un serveur, détermine seul la répartition des échanges TCP sur les différentes interfaces dont le terminal dispose. Par exemple, lorsqu'une congestion est détectée par le terminal sur une interface particulière, le terminal mettant en oeuvre le protocole MPTCP réagit, suite à cette détection, en modifiant la répartition des échanges TCP sur ses différentes interfaces.

Une telle technique n'est donc pas optimale car le terminal réagit après la détection d'une congestion. Dans le cas du téléchargement d'un flux audiovisuel par le terminal, un tel comportement peut alors impacter la qualité de rendu du flux audiovisuel.

Le document EP 2 953 319 A1 décrit une méthode de téléchargement de contenus selon différents chemins de téléchargement en fonction d'une disponibilité des segments le long de ces chemins.

Le document EP 2 537 340 A1 décrit une méthode de téléchargement adaptatif de contenus via différentes interfaces réseaux.

### 3. Exposé de l'invention

L'invention vient améliorer l'état de la technique. Elle concerne un procédé de téléchargement d'un contenu audiovisuel depuis un réseau de données, mis en oeuvre par un terminal. Selon l'invention, un fichier de description décrivant un découpage du contenu audiovisuel en un ensemble de segments est reçu par le terminal. Un tel fichier de description comprend au moins deux informations représentatives respectivement de deux chemins de téléchargement des segments, chaque information représentative d'un chemin de téléchargement étant associée à une interface réseau, et au moins deux interfaces réseau étant distinctes. Le terminal obtient au moins une information de répartition de requêtes de téléchargement des segments par interface réseau, et pour au moins un segment du contenu audiovisuel à télécharger, une interface réseau du terminal est sélectionnée parmi les interfaces réseau associées aux chemins de téléchargement comprises dans le fichier de description, en fonction de l'information de répartition de requêtes obtenue. Une requête de téléchargement du segment est envoyée via l'interface réseau sélectionnée.

Le procédé selon l'invention permet ainsi à un terminal d'exploiter au mieux les interfaces réseau disponibles pour le téléchargement d'un contenu audiovisuel en tenant compte, lors de l'envoi de requêtes de téléchargement de segment, d'une information de répartition par interface réseau.

Selon l'invention, le terminal est informé de la possibilité d'utiliser plusieurs chemins pour télécharger un contenu audiovisuel via une information comprise dans le fichier de description du contenu audiovisuel, par exemple le manifeste du standard MPEG-DASH.

Par chemin de téléchargement, on entend ici le chemin réseau par lequel les segments transitent pour aller du serveur de distribution vers le terminal. Un tel chemin réseau comprend notamment une URL permettant d'accéder à un serveur de distribution.

Par segment, on entend ici aussi bien un segment d'un contenu audiovisuel, qu'un fragment de segment d'un contenu audiovisuel, aussi connu sous le nom "byte-range" dans le standard MPEG-DASH.

Selon l'invention, le chemin réseau spécifié dans le fichier de description est associé, implicitement ou explicitement, à une interface réseau, i.e. à une technologie (3G, 4G, WIFI, DSL, etc..) mise en oeuvre par l'interface réseau utilisée pour accéder au réseau de données. Une telle association peut être implicite, par exemple elle peut être déduite de l'adresse IP du serveur de distribution, ou bien explicite en spécifiant un identifiant d'interface réseau par exemple.

La répartition des requêtes de téléchargement sur les différentes interfaces réseau est de plus réalisée au niveau applicatif par le terminal et non plus au niveau de la couche transport comme c'est le cas pour le MPTCP. Avantageusement, le téléchargement multi-chemins (multipath en anglais) est également possible pour des requêtes selon le protocole HTTPS.

Selon un mode particulier de réalisation de l'invention, la au moins une information de répartition de requêtes de téléchargement des segments par interface réseau est obtenue en provenance d'un équipement du réseau de données.

Selon ce mode particulier de réalisation de l'invention, les informations de répartition des requêtes de téléchargement des segments par interface réseau sont fournies au terminal. Ainsi, le terminal ne détermine plus seul la répartition des requêtes de téléchargement par interface réseau. Un tel mode particulier de réalisation permet une répartition par interface réseau proactive et non plus réactive telle que dans l'art antérieur.

Par exemple, de telles informations de répartition sont fournies par l'opérateur du réseau ou le diffuseur du contenu audiovisuel. Ceux-ci peuvent ainsi maîtriser l'utilisation des ressources du réseau et des points d'accès pour le téléchargement de contenu audiovisuel, et anticiper des problèmes de congestion, par exemple une montée en charge d'un point d'accès. Selon une autre variante, de telles informations de répartition sont fournies par des équipements en coupure de la chaîne de distribution du contenu dans le réseau de données. De tels équipements disposent d'une information de répartition optimale et peuvent ainsi enrichir le fichier de description avec les informations de répartition.

Selon un autre mode particulier de réalisation de l'invention, les au moins deux informations représentatives respectivement de deux chemins de téléchargement sont comprises respectivement dans un champ "BaseURL" du fichier de description selon le standard MPEG-DASH.

Avantageusement, l'utilisation du champ "BaseURL" du manifeste MPEG-DASH pour spécifier les différents chemins de téléchargement possibles permet de fournir un fichier de description compatible avec les terminaux ne mettant pas en oeuvre le procédé de téléchargement selon l'invention. Ainsi, de tels terminaux peuvent toutefois télécharger le flux audiovisuel en utilisant le chemin spécifié dans le premier champ "BaseURL" rencontré dans le fichier de description.

Selon un autre mode particulier de réalisation de l'invention, l'information de répartition des requêtes de téléchargement des segments par interface réseau est comprise dans le fichier de description reçu.

Selon un autre mode particulier de réalisation de l'invention, l'information de répartition des requêtes de téléchargement des segments par interface réseau est un paramètre d'un champ "BaseURL" du fichier de description reçu.

Par exemple, selon ce mode particulier de réalisation de l'invention, une répartition grossière des téléchargements de segments peut être fournie en termes de pourcentage de segments à télécharger sur chaque interface réseau.

Selon un autre mode particulier de réalisation de l'invention, l'information de répartition des requêtes de téléchargement des segments par interface réseau est représentée pour chaque segment par une liste d'intervalles d'octets du contenu audiovisuel, chaque intervalle étant associé à un chemin de téléchargement.

Par exemple, selon ce mode particulier de réalisation de l'invention, une répartition fine des téléchargements de segments est fournie.

Selon un autre mode particulier de réalisation de l'invention, l'information de répartition des requêtes de téléchargement des segments par interface réseau est obtenue via un échange de messages entre un serveur du réseau de données et le terminal selon le mécanisme SAND (Server And Network Assisted DASH) du standard MPEG-DASH.

Selon ce mode particulier de réalisation de l'invention, l'information de répartition de téléchargements des segments par interface réseau est obtenue de manière dynamique, sans nécessiter l'envoi d'un nouveau fichier de description.

L'invention concerne également un dispositif de téléchargement d'un contenu audiovisuel depuis un réseau de données, comprenant un processeur configuré pour:
- recevoir un fichier de description décrivant un découpage du contenu audiovisuel en un ensemble de segments, le fichier de description comprenant au moins deux informations représentatives respectivement de deux chemins de téléchargement des segments, chaque information représentative d'un chemin de téléchargement étant associée à une interface réseau,
- obtenir au moins une information de répartition des requêtes de téléchargement des segments par interface réseau,
- pour au moins un segment du contenu audiovisuel à télécharger:
   - sélectionner, en fonction de l'information de répartition des requêtes de téléchargement obtenue et des au moins deux informations représentatives respectivement de deux chemins de téléchargement des segments, une interface réseau via laquelle une requête de téléchargement dudit segment est destinée à être émise,
   - transmettre ladite requête de téléchargement à un dispositif de transmission adapté pour émettre la requête de téléchargement via l'interface réseau sélectionnée.

Selon un autre mode particulier de réalisation de l'invention, le dispositif de transmission est compris dans le dispositif de téléchargement et au moins deux interfaces réseau adaptées pour recevoir et émettre des données depuis et vers le réseau de données sont comprises dans le dispositif de téléchargement.

L'invention concerne également un terminal de téléchargement comprenant un dispositif de téléchargement selon l'un quelconque des modes particuliers de réalisation décrits ci-dessus.

L'invention concerne également un procédé de fourniture d'une information de téléchargement multi-chemins d'un contenu audiovisuel découpé en segment. Selon un tel procédé, un fichier de description du contenu audiovisuel est généré, un tel fichier comprenant au moins deux informations représentatives respectivement de deux chemins de téléchargement des segments, chaque information représentative d'un chemin de téléchargement étant associée à une interface réseau, et au moins deux interfaces réseau étant distinctes. Les au moins deux informations représentatives de deux chemins de téléchargement des segments permettent à un terminal de sélectionner, en fonction d'une information de répartition de requêtes de téléchargement obtenue par le terminal, une interface réseau via laquelle une requête de téléchargement d'un segment est destinée à être émise par ledit terminal. Le fichier de description généré est envoyé au terminal.

L'invention concerne également un dispositif de fourniture d'une information de téléchargement multi-chemins d'un contenu audiovisuel découpé en segments, le dispositif de fourniture comprenant un processeur configuré pour transmettre à un terminal:
- un fichier de description comprenant au moins deux informations représentatives respectivement de deux chemins de téléchargement des segments, chaque information représentative d'un chemin de téléchargement étant associée à une interface réseau,
- les au moins deux informations représentatives de deux chemins de téléchargement des segments permettant au terminal de sélectionner, en fonction d'une information de répartition de requêtes de téléchargement obtenue par le terminal, une interface réseau via laquelle une requête de téléchargement d'un segment est destinée à être émise par ledit terminal.

Selon un mode particulier de réalisation de l'invention, le dispositif de fourniture ci-dessus est également configuré pour transmettre au terminal ladite information de répartition de requêtes de téléchargement des segments par interface réseau.

L'invention concerne également un procédé de fourniture d'une information de répartition de requêtes de téléchargement d'un contenu audiovisuel découpé en segments. Selon un tel procédé de fourniture d'une information de répartition, des informations de répartition de requêtes de téléchargement des segments par interface réseau sont déterminées par un dispositif de fourniture d'une information de répartition et transmises à un terminal adapté pour télécharger ledit contenu audiovisuel. Ainsi, de telles informations de répartition permettant au terminal de sélectionner une interface réseau via laquelle une requête de téléchargement d'un segment est destinée à être émise par ledit terminal.

L'invention concerne également un dispositif de fourniture d'une information de répartition de requêtes de téléchargement d'un contenu audiovisuel découpé en segments. Un tel dispositif de fourniture d'une information de répartition est configuré pour transmettre à un terminal adapté pour télécharger ledit contenu audiovisuel des informations de répartition de requêtes de téléchargement des segments par interface réseau, permettant au terminal de sélectionner une interface réseau via laquelle une requête de téléchargement d'un segment est destinée à être émise par ledit terminal.

Avantageusement, un tel dispositif de fourniture d'une information de répartition est placé dans le réseau en coupure de la chaîne de distribution du contenu audiovisuel.

L'invention concerne également un programme d'ordinateur comportant des instructions pour la mise en oeuvre du procédé de téléchargement selon l'un quelconque des modes particuliers de réalisation décrits précédemment, lorsque ledit programme est exécuté par un processeur. Le procédé de téléchargement selon l'invention peut être mis en oeuvre de diverses manières, notamment sous forme câblée ou sous forme logicielle.

L'invention concerne également un programme d'ordinateur comportant des instructions pour la mise en oeuvre du procédé de fourniture d'une information de téléchargement multi-chemins d'un contenu audiovisuel selon l'un quelconque des modes particuliers de réalisation décrits précédemment, lorsque ledit programme est exécuté par un processeur. Le procédé de fourniture d'une information de téléchargement multi-chemins d'un contenu audiovisuel selon l'invention peut être mis en oeuvre de diverses manières, notamment sous forme câblée ou sous forme logicielle.

L'invention concerne également un programme d'ordinateur comportant des instructions pour la mise en oeuvre du procédé de fourniture d'une information de répartition de requêtes de téléchargement d'un contenu audiovisuel selon l'un quelconque des modes particuliers de réalisation décrits précédemment, lorsque ledit programme est exécuté par un processeur. Le procédé de fourniture d'une information de répartition de requêtes de téléchargement d'un contenu audiovisuel selon l'invention peut être mis en oeuvre de diverses manières, notamment sous forme câblée ou sous forme logicielle.

Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1A illustre un environnement de mise en oeuvre selon un mode particulier de réalisation de l'invention,
- la figure 1B illustre un environnement de mise en oeuvre selon un autre mode particulier de réalisation de l'invention,
- la figure 2A illustre des étapes du procédé de téléchargement selon un mode particulier de réalisation de l'invention,
- la figure 2B illustre des étapes du procédé de téléchargement selon un autre mode particulier de réalisation de l'invention,
- la figure 3A illustre des étapes du procédé de fourniture d'une information de téléchargement multi-chemins d'un contenu audiovisuel selon un mode particulier de réalisation de l'invention,
- la figure 3B illustre des étapes d'un procédé de fourniture d'informations de répartition de requêtes de téléchargement selon un mode particulier de réalisation de l'invention,
- la figure 3C illustre des étapes du procédé de fourniture d'informations de répartition de requêtes de téléchargement selon un autre mode particulier de réalisation de l'invention,
- la figure 4A illustre un système de téléchargement configuré pour mettre en oeuvre le procédé de téléchargement selon un mode particulier de réalisation de l'invention,
- la figure 4B illustre un dispositif de téléchargement configuré pour mettre en oeuvre le procédé de téléchargement selon un mode particulier de réalisation de l'invention,
- la figure 5 illustre un dispositif de fourniture d'une information de téléchargement multi-chemins d'un contenu audiovisuel selon un mode particulier de réalisation de l'invention,
- la figure 6 illustre un dispositif de fourniture d'informations de répartition de requêtes de téléchargement selon un mode particulier de réalisation de l'invention.

### 5. Description d'un mode de réalisation de l'invention

### 5.1 Principe général

Selon l'invention, lors du streaming d'un contenu multimédia, par exemple un film, ou un flux télévisuel, ou autre, par un terminal, le terminal peut récupérer les segments du contenu multimédia via différents chemins de téléchargement associés à différentes interfaces réseau disponibles sur le terminal. La sélection d'une interface réseau pour obtenir un segment particulier est réalisée par le terminal grâce à des informations de répartition des requêtes de téléchargement par interface réseau que le terminal a obtenues.

De telles informations de répartition de requêtes de téléchargement peuvent être déterminées en fonction des performances réseau, par exemple utilisation de la bande passante d'un réseau liée à une interface réseau particulière, ou de la charge des équipements du réseau...

De telles informations de répartition de requêtes de téléchargement peuvent être déterminées par le terminal lui-même. Par exemple, le terminal mesure sur chaque interface le délai de téléchargement du segment de données demandé et en déduit le débit utile associé à l'interface. Il peut ainsi faire une répartition en comparant les débits utiles de chaque interface. Selon cet exemple, les informations de répartition sont déterminées par rapport à des informations réseaux obtenues par un niveau applicatif du terminal (niveau http).

Selon un autre exemple, le terminal possède un module de plus bas niveau (TCP, IP, voire une couche physique) qui remonte des informations réseaux plus fines, telles que le taux de pertes, la stabilité, etc.., vers le niveau applicatif (http) du terminal.

Selon encore un autre exemple, le terminal possède un module appelé « edge controller » en anglais qui est un module piloté par le réseau EDGE, un contrôleur de plus haut niveau du réseau envoyant au terminal des polices d'usage des différents réseaux d'accès.

Selon un autre mode particulier de réalisation de l'invention, le terminal peut recevoir de telles informations de répartition par interface réseau des requêtes de téléchargement, en provenance par exemple d'un équipement d'un réseau de données. Le terminal dispose ainsi d'informations de répartition déterminées en fonction d'informations réseau dont il n'a pas normalement connaissance et le téléchargement des segments du contenu multimédia par le terminal est ainsi optimisé.

De plus, les informations de répartition par interface réseau peuvent être associées à un profil. Par exemple, elles peuvent être dépendantes d'un critère d'efficacité. Par exemple, un ensemble d'informations de répartition par interface réseau peut être associé à un profil "low delay" (faible délai) selon lequel la répartition sera telle qu'elle permet d'optimiser le délai de téléchargement, pour limiter le retard des contenus audiovisuels en direct par exemple.

Un ensemble d'informations de répartition par interface réseau peut être associé à un profil "high reliability" (grande robustesse) selon lequel la répartition sera telle qu'elle permet de privilégier les réseaux les plus robustes pour le téléchargement.

Un ensemble d'informations de répartition par interface réseau peut être associé à un profil "high bitrate" (haut débit) selon lequel la répartition sera telle qu'elle permet de maximiser la bande passante agrégée, i.e. la bande passante sur les différents réseaux utilisés pour le téléchargement.

Un ensemble d'informations de répartition par interface réseau peut être associé à un profil "tile priority" (priorité de tuiles) selon lequel la répartition sera telle qu'elle permet de privilégier le téléchargement de régions d'intérêts d'un contenu audiovisuel via des chemins de téléchargement optimaux. D'autres types de profils sont également envisageables.

### 5. 2 Exemples de mise en oeuvre

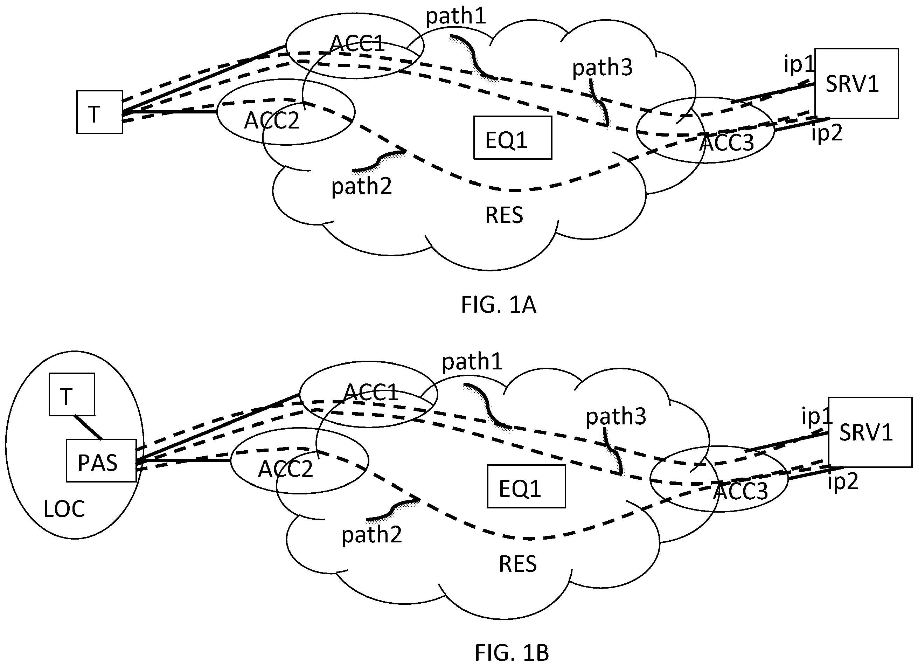

La figure 1A illustre un environnement de mise en oeuvre selon un mode particulier de réalisation de l'invention. Un tel environnement comprend un terminal T configuré pour télécharger un contenu multimédia en streaming, par exemple conformément au protocole MPEG-DASH, fourni par un serveur SRV1 de distribution de contenu via un réseau de données RES d'un opérateur de communication. Le réseau de données RES est par exemple un réseau IP. Le réseau de données RES est interconnecté avec différents réseaux d'accès ACC1, ACC2, ACC3 permettant à des équipements connectés à de tels réseaux d'accès d'utiliser le réseau de données RES pour émettre et recevoir des données.

Le serveur SRV1 accède au réseau de données RES via un réseau d'accès ACC3, par exemple un réseau fixe DSL (pour Digital Subscriber Line en anglais). Le terminal T est apte à accéder au réseau RES via l'une quelconque des interfaces réseau disponible sur ce terminal T. Dans l'exemple illustré en figure 1A, le terminal T peut accéder au réseau RES via un réseau d'accès ACC1, par exemple un réseau fixe DSL, et via un réseau d'accès ACC2, par exemple un réseau mobile 4G.

Tel qu'illustré en figure 1A, le terminal T peut télécharger les segments du contenu multimédia fourni par le serveur SRV1 via plusieurs chemins de téléchargement path1, path2, et path3. Pour cela, lorsque le terminal T souhaite télécharger un contenu multimédia, il reçoit un fichier de description MPD comprenant notamment une adresse IP du serveur fournissant le contenu multimédia. Dans l'exemple illustré en figure 1A, les segments du contenu multimédia sont accessibles depuis le serveur SRV1 via l'une des adresses IP du serveur SRV1: ip1 et ip2. D'autres modes de réalisation sont bien sûr possibles, par exemple plusieurs serveurs de distribution sont possibles, ou bien un unique serveur de distribution ayant une seule adresse IP de distribution, etc..

Selon l'invention, à partir du fichier de description, le terminal T identifie pour chaque chemin de téléchargement path1, path2, path3, une interface réseau, i.e. une technologie permettant d'accéder au réseau de données, associée au chemin de téléchargement.

Par exemple, selon la figure 1A, les chemins de téléchargement path1 et path3 sont associés au réseau d'accès ACC1, et le chemin de téléchargement path2 est associé au réseau d'accès ACC2. De sorte que pour requérir un segment via le chemin de téléchargement path1 ou path3, le terminal T utilise par exemple une interface réseau radio pour un réseau d'accès WIFI ou une interface réseau Ethernet pour un réseau d'accès DSL, et pour requérir un segment via le chemin de téléchargement path2, le terminal T utilise par exemple une interface réseau 4G.

Selon l'invention, afin de sélectionner de manière optimale un chemin de téléchargement pour obtenir un segment du contenu multimédia, le terminal T obtient des informations de répartitions des requêtes de téléchargement. De telles informations peuvent lui être fournies par un équipement (EQ1) du réseau de données RES placé en coupure de la chaîne de distribution de contenus, ou par le serveur SRV1. L'équipement EQ1 placé en coupure est par exemple un serveur DANE (pour DASH Aware Network Element en anglais), ou une passerelle CGW (pour Convergent Gateway en anglais) réalisant la convergence entre un réseau radio LTE et un réseau fixe, ou une passerelle UGW (pour Unified Gateway en anglais) utilisée dans les réseaux 5G, ou encore dans le cas d'un réseau mobile, un noeud MEC (pour Mobile Edge Computing en anglais) ou EDGE-node.

Le terminal T peut également déterminer lui-même les informations de répartitions, par exemple à partir d'informations de trafic réseau qui lui sont remontées, ou à partir d'observations du trafic effectuées sur les différentes interfaces du terminal T.

Lorsque le terminal T a sélectionné une interface réseau pour envoyer une requête de téléchargement de segment, un module routeur du terminal T transmet la requête de téléchargement de segment via l'interface réseau sélectionnée.

Selon un autre mode particulier de réalisation de l'invention décrit en figure 1B, le module routeur n'est pas compris dans le terminal T, mais dans un autre dispositif connecté au terminal T.

L'environnement illustré en figure 1B se distingue de l'environnement illustré en figure 1A en ce que le terminal T est connecté au réseau de donnés RES via un dispositif de routage PAS, par exemple une passerelle domestique. Le terminal T est par exemple connecté à la passerelle PAS via un réseau local LOC établi par la passerelle PAS, par exemple un réseau WIFI. En variante, le terminal T peut être connecté de manière filaire à la passerelle PAS. Selon le mode de réalisation décrit en figure 1B, le terminal T est par exemple un décodeur vidéo ou une télévision connectée.

Selon le mode de réalisation décrit en figure 1B, lorsque le terminal T sélectionne, en fonction des informations de répartition des requêtes de téléchargement par interface, une interface réseau pour envoyer une requête de téléchargement d'un segment, la requête de téléchargement comprend une information indiquant à la passerelle PAS vers quelle interface réseau la requête de téléchargement doit être routée.

On décrit ci-après des étapes du procédé de téléchargement d'un contenu audiovisuel depuis un réseau de données selon un mode particulier de réalisation de l'invention. Le procédé est par exemple mis en oeuvre par le terminal T décrit en relation avec la figure 1A ou 1B.

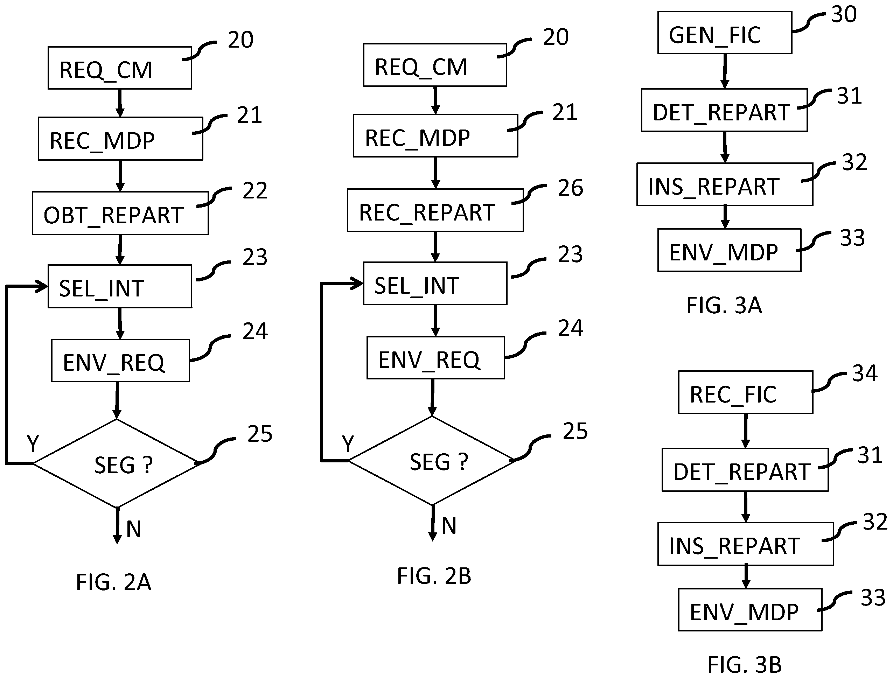

En référence à la figure 2A, lors d'une étape 20, le terminal T envoie au serveur de distribution de contenus SRV1 une requête pour télécharger un contenu audiovisuel. Par exemple, un utilisateur du terminal T visualise un catalogue de contenus audiovisuels affiché dans un navigateur sur un écran du terminal T et sélectionne, via une interface utilisateur du terminal T, un contenu audiovisuel dans le catalogue. Une telle sélection d'un contenu audiovisuel provoque l'envoi par le navigateur du terminal T d'une requête de téléchargement du contenu audiovisuel à destination du serveur SRV1. De manière classique, le terminal T et le serveur SRV1 communiquent pour acquitter la demande du terminal T et démarrer la distribution du contenu audiovisuel.

Lors d'une étape 21, le terminal T reçoit en provenance du serveur SRV1 un fichier de description MPD du contenu audiovisuel sélectionné.

Un tel fichier de description MPD décrit le découpage du contenu audiovisuel en un ensemble de segments que le terminal T doit télécharger pour pouvoir jouer le contenu audiovisuel.

Un tel fichier de description MPD comprend au moins deux informations représentatives respectivement de deux chemins de téléchargement des segments, chaque information représentative d'un chemin de téléchargement étant associée à une interface réseau.

Dans l'exemple décrit en relation avec les figures 1A ou 1B, le fichier de description MPD comprend 3 chemins de téléchargement path1, path2, path3, indiquant un chemin réseau pour accéder au serveur SRV1. Les chemins path1 et path3 sont associés à une interface réseau permettant l'accès au réseau d'accès ACC1, et le chemin de téléchargement path2 est associé une interface réseau permettant l'accès au réseau d'accès ACC2.

On présente ci-après, de manière non limitative, un exemple de fichier de description MPD conforme au standard MPEG-DASH, dans lequel l'association d'une interface réseau avec un chemin de téléchargement peut être spécifié selon différentes variantes. Bien entendu, d'autres exemples de fichier de description sont également possibles.

Par exemple, le fichier de description MPD est de la forme suivante:

```
 <MPD xmlns="urn:mpeg:dash:schema:mpd:2011" ...>
 <Period ...>
 <AdaptationSet ...>
 <Representation ...>
 <BaseURL>http://srv1.monopath.fr/path/</BaseURL>
 <BaseURL>http://srv2.monopath.net/path/</BaseURL>
 <BaseURL>http://srv1.multipath.path1.fr?path-DSL-
 @ip=167.105.177.6&percent=25/</BaseURL>
 <BaseURL>http://srv1.multipath.path2.fr?path-4G-
 @ip=10.127.4.54&percent=60/</BaseURL>
 <BaseURL>http://srv1.multipath.path3.fr?path-DSL-
 @ip=10.127.4.54&percent=15/</BaseURL>
 
 <SegmentList timescale="90000" duration="5400000">
 <RepresentationIndex sourceURL="representation-index.sidx"/>
 <SegmentURL media="segment-1.ts"/>
 <SegmentURL media="segment-2.ts"/>
 <SegmentURL media="segment-3.ts"/>
 <SegmentURL media="segment-4.ts"/>
 <SegmentURL media="segment-5.ts"/>
 <SegmentURL media="segment-6.ts"/>
 <SegmentURL media="segment-7.ts"/>
 <SegmentURL media="segment-8.ts"/>
 <SegmentURL media="segment-9.ts"/>
 <SegmentURL media="segment-10.ts"/>
 ...
 </SegmentList>
 </Representation>
 </AdaptationSet>
 </Period>
 
 </MPD>
```

Selon l'exemple de fichier de description ci-dessus, les segments du contenu audiovisuel peuvent être téléchargés depuis le serveur SRV1 ou un serveur SRV2 via les URLs (pour Uniform Ressource Locator en anglais) spécifiées dans les champs "BaseURL" du fichier. La liste des segments du contenu audiovisuel à télécharger est spécifiée à l'aide des balises "SegmentList".

Selon l'exemple décrit ici, une interface réseau est associée de manière implicite à chaque chemin de téléchargement, en paramètre de l'URL.

En variante, l'interface réseau peut être associée à chaque chemin de téléchargement de manière explicite, à l'aide d'une nouvelle balise dédiée du fichier de description MPD, par exemple en ajoutant pour chaque chemin de téléchargement, un champ de type BaseUrl = eth0://ressource, où eth0 correspond à l'interface réseau associée au chemin de téléchargement "ressource".

Avantageusement, selon l'invention, un terminal qui ne serait pas compatible avec le téléchargement des segments du contenu audiovisuel via plusieurs chemins de téléchargement, pourrait quand même utiliser le fichier de description MPD reçu pour émettre des requêtes de téléchargement de segments. En effet, un tel terminal lira par exemple le premier ou le deuxième champ "BaseURL" spécifié dans un tel fichier de description et utilisera le chemin de téléchargement indiqué dans ce champ.

Lors d'une étape 22, le terminal T obtient au moins une information de répartition de requêtes de téléchargement des segments par interface réseau.

Selon le mode particulier de réalisation de l'invention décrit ici, les informations de répartition par interface sont fournies en paramètre de l'URL des chemins de téléchargement, par exemple sous la forme de pourcentage. Par exemple, pour le fichier MPD ci-dessus:
- le chemin path1 doit être utilisé pour 25% des requêtes de téléchargement,
- le chemin path2 doit être utilisé pour 60% des requêtes de téléchargement,
- le chemin path3 doit être utilisé pour 15% des requêtes de téléchargement.

Selon une autre variante, le fichier de description MPD peut être de la forme suivante:

```
 <MPD xmlns="urn:mpeg:dash:schema:mpd:2011" ...>
 <Period ...>
 <AdaptationSet ...>
 <Representation ...>
 <BaseURL>http://server1.monopath.fr/path/</BaseURL>
 <BaseURL>http://server2.monopath.net/path/</BaseURL>
 <BaseURL>http://server1.multipath.path1.fr?path-DSL-
 @ip=167.105.177.6/</BaseURL>
 <BaseURL>http://server1.multipath.path2.fr?path-4G-
 @ip=10.127.4.54/</BaseURL>
 <BaseURL>http://serverl.multipath.path3.fr?path-DSL-
 @ip=10.127.4.54/</BaseURL>
 
 <SegmentList ...> ...
 
 <SegmentURL media="path/segment1.m4s mediaRange="1305-25305" indexRange-
 path1="1305-9678" indexRange-path2="9679-19876" indexRange-path3="19877-
 25305"/>
 <SegmentURL media="path/segment2.m4s mediaRange="25306-49306" indexRange-
 path1="25306-29875" indexRange-path2="29876-37860" indexRange-
 path3="37861-49306"/>
 <SegmentURL media="path/segment3.m4s mediaRange="49307-60512" indexRange-
 path1="49307-52741" indexRange-path2="52741-60512"/>
 
 ...
 </SegmentList>
 </Representation>
 </AdaptationSet>
 </Period>
 
 </MPD>
 
 ...
 </SegmentList>
 </Representation>
 </AdaptationSet>
 </Period>
 </MPD>
```

Selon cette variante, les informations de répartition des requêtes de téléchargement des segments par interface réseau sont fournies en spécifiant pour chaque segment à télécharger, une liste d'intervalles d'octets du contenu audiovisuel, aussi appelé byte-range, et pour chaque intervalle d'octets du segment, le chemin de téléchargement associé.

Par exemple, pour le segment " segment1.m4s ", le premier intervalle d'octet de 1305-9678 doit être requis via le chemin de téléchargement path1, le deuxième intervalle d'octet de 9679-19876 doit être requis via le chemin de téléchargement path2, et le troisième intervalle d'octet de 19877-25305 doit être requis via le chemin de téléchargement path3.

Selon une autre variante, le fichier de description MPD est en mode dit segment template, et peut être de la forme suivante:

```
 </Representation>
 <MPD xmlns="urn:mpeg:dash:schema:mpd:2011" ...>
 <Period ...>
 <AdaptationSet ...>
 <Representation ...>
 <BaseURL>http://server1.monopath.fr/path/</BaseURL>
 <BaseURL>http://server2.monopath.net/path/</BaseURL>
 <BaseURL>http://server1.multipath.path1.fr?path-DSL-
 @ip=167.105.177.6/</BaseURL>
 <BaseURL>http://server1.multipath.path2.fr?path-4G-
 @ip=10.127.4.54/</BaseURL>
 <BaseURL>http://server1.multipath.path3.fr?path-DSL-
 @ip=10.127.4.54/</BaseURL>
 <SegmentTemplate media="segment-$Number$.m4s" timescale="90000">
 <MultipathTemplate mediaRange-path1="%25" mediaRange-path2="%60"
 mediaRange-path3="%15">
 </MultipathTemplate>
 <SegmentTimeline>
 <S t="0" r="100" d="5400000"/>
 </SegmentTimeline>
 </SegmentTemplate>
 ...
 </Representation>
 </AdaptationSet>
 </Period>
 </MPD>
```

Selon cette variante, le terminal T doit générer lui-même les URLs via lesquelles télécharger les segments du contenu audiovisuel en utilisant le modèle ou template défini dans le champ "SegmentTemplate". Selon cette variante, les informations de répartitions par interface sont fournies dans un champ "MultipathTemplate" sous la forme de pourcentage associé à chaque chemin de téléchargement. Cette manière de fournir les informations de répartition par interface peut aussi être utilisée dans le cas où le fichier de description MPD comprend la liste des segments avec le champ "SegmentList" tel qu'illustré avec le premier exemple de fichier ci-dessus. De même, les informations de répartition par interface peuvent être fournies dans le fichier MPD en mode segment template en paramètre des champs "BaseURL" tel que décrit avec le premier exemple de fichier ci-dessus.

Lors d'une étape 23, le terminal T détermine, à partir du fichier de description, le segment du contenu audiovisuel à télécharger et sélectionne, pour ce segment, une interface réseau du terminal T parmi les interfaces réseau associées aux chemins de téléchargement. Une telle sélection est réalisée en fonction de l'information de répartition de requêtes obtenue lors de l'étape 22. Lorsque le segment à télécharger n'est pas le premier segment à télécharger, lors de l'étape 23, le terminal T tient également compte des interfaces réseau sélectionnées pour les requêtes de téléchargement préalablement émises, afin de respecter la répartition des requêtes obtenues.

Lors d'une étape 24, le terminal T envoie une requête de téléchargement du segment du contenu audiovisuel à télécharger via l'interface réseau sélectionnée lors de l'étape 23.

Lors d'une étape 25, le terminal T vérifie si d'autres segments du contenu audiovisuel doivent être téléchargés. Si c'est le cas (Y), le procédé reprend à l'étape 23. Sinon, si tous les segments du contenu audiovisuel ont été téléchargés, ou si l'utilisateur a demandé l'arrêt de la visualisation du contenu audiovisuel, le téléchargement prend fin.

La figure 2B illustre un autre mode particulier de réalisation de l'invention. Les étapes identifiées avec les mêmes références qu'à la figure 2A sont identiques à celles décrites en relation avec la figure 2A.

Selon le mode particulier de réalisation de l'invention décrit en figure 2B, les informations de répartition sont fournies lors d'une étape 26, par des échanges de messages entre le terminal T et le serveur SRV1. Par exemple, de tels messages peuvent être échangés selon le standard SAND (Server And Network Assisted DASH en anglais), défini dans la norme ISO/IEC 23009-5. De tels messages peuvent être des messages XML échangés selon le protocole HTTP ou autre.

Comme décrit plus haut, les informations de répartition peuvent être fournies sous la forme de pourcentage ou bien une interface réseau est spécifiée pour chaque segment, ou pour chaque intervalle de segment.

Selon une variante de l'un quelconque des modes particuliers de réalisation de l'invention décrits ci-dessus, les informations de répartition fournies au terminal T peuvent être mises à jour soit par l'envoi d'un nouveau fichier de description MPD au terminal T, soit par l'envoi de nouveaux messages SAND.

La figure 3A illustre des étapes du procédé de fourniture d'une information de téléchargement multi-chemins d'un contenu audiovisuel selon un mode particulier de réalisation de l'invention. Par exemple, un tel procédé est mis en oeuvre par le serveur SRV1 illustré sur les figures 1A et 1B.

Lors d'une étape 30, suite à la requête de téléchargement d'un contenu audiovisuel émise par le terminal T, le serveur SRV1 génère un fichier de description du contenu audiovisuel. Une information indiquant au terminal destinataire d'un tel fichier que les segments du contenu audiovisuel peuvent être obtenus par un téléchargement multi-chemins, i.e. utilisant différents réseaux, est insérée dans le fichier de description. Le fichier de description généré comprend alors au moins deux informations représentatives respectivement de deux chemins de téléchargement des segments, et chaque information représentative d'un chemin de téléchargement est associée à une interface réseau.

Selon un mode particulier de réalisation de l'invention, lors d'une étape 31, le serveur SRV1 détermine la répartition par interface réseau des requêtes de téléchargement que le terminal T doit mettre en oeuvre pour télécharger le contenu audiovisuel. Par exemple, le serveur SRV1 obtient des informations d'utilisation de ressources réseau et de charge en provenance d'équipements du réseau RES. Le serveur SRV1 détermine la répartition par interface réseau en fonction de ces informations.

Lors d'une étape 32, le serveur SRV1 insère les informations de répartition dans le fichier de description MPD du contenu audiovisuel demandé par le terminal T. Les informations de répartition peuvent être insérées dans le fichier selon l'un quelconque des exemples décrits ci-dessus en relation avec la figure 2A.

Lors d'une étape 33, le serveur SRV1 envoie au terminal T le fichier de description.

Selon un autre mode particulier de réalisation de l'invention décrit en relation avec la figure 3B, les informations de répartition de requêtes de téléchargement sont fournies pas un équipement EQ1 du réseau de données RES, placé en coupure de la chaîne de distribution du contenu audiovisuel, comme représenté sur les figures 1A et 1B.

Selon ce mode particulier de réalisation de l'invention, suite à l'envoi par le serveur SRV1 du fichier de description au terminal T, l'équipement EQ1 le reçoit, lors d'une étape 34.

Lors de l'étape 31 similaire à celle de la figure 3A, l'équipement EQ1 détermine les informations de répartition en fonction de la charge des équipements du réseau et du trafic du réseau de donnés RES, et des réseaux d'accès ACC1, ACC2, et lors de l'étape 32, similaire à celle de la figure 3A, modifie le fichier de description MPD reçu pour insérer les informations de répartition par interface réseau des requêtes de téléchargement, selon l'un quelconque des exemples décrits ci-dessus en relation avec la figure 2A.

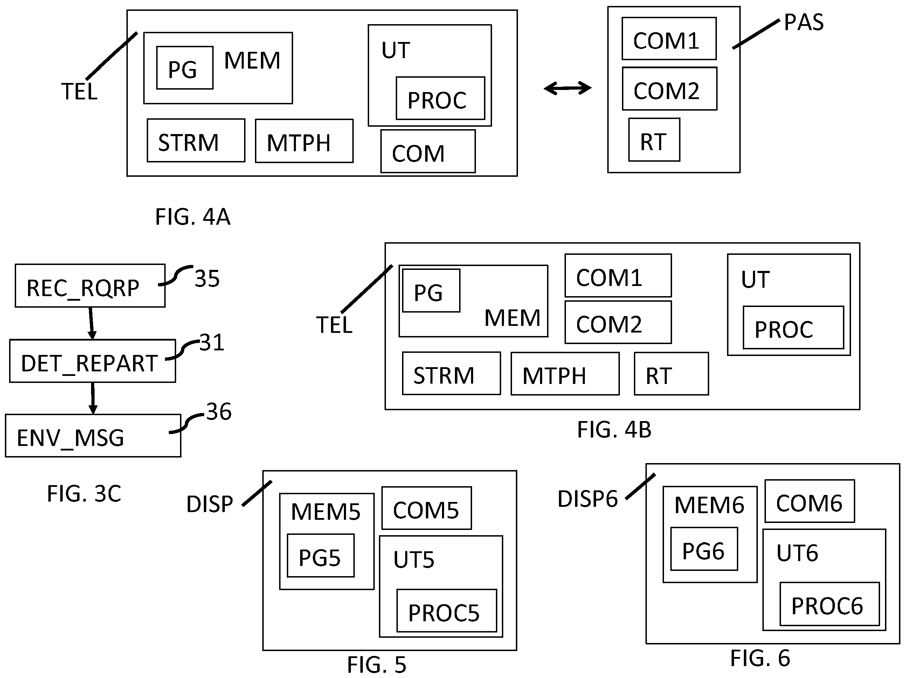

La figure 3C illustre des étapes du procédé de fourniture d'informations de répartition de requêtes de téléchargement selon un autre mode particulier de réalisation de l'invention. Selon ce mode particulier de réalisation de l'invention, les étapes du procédé peuvent être mises en oeuvre par le serveur SRV1 ou par un équipement EQ1 du réseau RES.

Selon ce mode particulier de réalisation de l'invention, les informations de répartition par interface réseau sont fournies au terminal T via l'échange de messages SAND.

Lors d'une étape 35, lorsque le terminal T détecte via le fichier de description MPD que les segments du contenu audiovisuel peuvent être téléchargés via plusieurs chemins de téléchargement, le terminal T envoie au serveur SRV1 ou à l'équipement EQ1 une requête de répartition pour obtenir des informations de répartition par interface réseau. Une telle requête est envoyée selon les échanges de messages SAND.

Lors d'une étape 31, similaire à celle décrite en relation avec la figure 3A ou 3B, les informations de répartition sont déterminées.

Lors d'une étape 36, le serveur SRV1 ou l'équipement EQ1 envoie un message SAND au terminal T comprenant les informations de répartition déterminées.

Au cours du téléchargement des segments du contenu audiovisuel, le serveur SRV1 ou l'équipement EQ1 peut envoyer un nouveau message SAND contenant des nouvelles informations de répartition, par exemple suite à la détection d'une montée en charge du réseau, afin d'éviter une congestion.

La figure 4A illustre un système de téléchargement configuré pour mettre en oeuvre le procédé de téléchargement selon l'un quelconque des modes particuliers de réalisation de l'invention décrits précédemment.

Selon un mode particulier de réalisation de l'invention, le système de téléchargement comprend un dispositif de téléchargement TEL, par exemple le terminal T décrit en relation avec la figure 1B et un routeur PAS. Le dispositif de téléchargement TEL a l'architecture classique d'un ordinateur et comprend notamment une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de téléchargement tel que décrit précédemment, lorsque le programme est exécuté par le processeur PROC.

A l'initialisation, les instructions de code du programme d'ordinateur PG sont par exemple chargées dans une mémoire RAM avant d'être exécutées par le processeur PROC. Le processeur PROC de l'unité de traitement UT met notamment en oeuvre les étapes du procédé de téléchargement décrit en relation avec les figures 2A ou 2B selon les instructions du programme d'ordinateur PG.

Le dispositif de téléchargement TEL comprend notamment une interface réseau COM permettant au dispositif de téléchargement TEL de communiquer avec le routeur PAS et de lui transmettre des requêtes de téléchargement de segment d'un contenu audiovisuel.

Le routeur PAS comprend notamment au moins deux interfaces réseau COM1, COM2 adaptées pour accéder à un réseau de données et transmettre des données sur ce réseau. Chaque interface réseau COM1, COM2 est spécifique au réseau d'accès auquel elle permet d'accéder. Le routeur PAS comprend également des tables de routage RT configurées pour rediriger une requête de téléchargement vers une interface réseau COM1 ou COM2 en fonction de l'adresse IP de destination comprise dans la requête.

Selon un autre mode particulier de réalisation de l'invention, les étapes du procédé de téléchargement sont mises en oeuvre par des modules fonctionnels. Pour cela, le dispositif de téléchargement TEL comprend en outre:
- un module de streaming DASH STRM adapté pour déterminer des segments du contenu audiovisuel à télécharger à un instant donné,
- un module "multipath" MTPH adapté pour sélectionner une interface réseau à utiliser pour transmettre une requête de téléchargement d'un segment, en fonction d'informations de répartition reçues.

Le module de communication COM est également configuré pour recevoir des données du réseau de données RES, via le routeur PAS, et notamment un fichier de description d'un contenu audiovisuel à télécharger.

L'unité de traitement UT coopère avec les différents modules fonctionnels décrits ci-dessus et la mémoire MEM afin de mettre en oeuvre les étapes du procédé de téléchargement.

Les différents modules fonctionnels décrits ci-dessus peuvent être sous forme matérielle et/ou logicielle. Sous une forme logicielle, un tel module fonctionnel peut comprendre un processeur, une mémoire et des instructions de code de programme pour mettre en oeuvre la fonction correspondant au module lorsque les instructions de code sont exécutées par le processeur du module. Sous une forme matérielle, un tel module fonctionnel peut être mis en oeuvre par tout type de circuits adaptés.

De manière classique, le dispositif de téléchargement TEL est configuré pour réaliser le rendu du contenu audiovisuel au fur et à mesure de la réception des segments en provenance du réseau RES.

La figure 4B illustre un dispositif de téléchargement TEL configuré pour mettre en oeuvre le procédé de téléchargement selon l'un quelconque des modes particuliers de réalisation de l'invention décrits précédemment. Selon ce mode particulier de réalisation de l'invention, la fonctionnalité de routage des requêtes de téléchargement est mise en oeuvre par le dispositif de téléchargement TEL. Le dispositif de téléchargement TEL correspond par exemple au terminal T décrit en relation avec la figure 1A. Il présente les mêmes caractéristiques que celles décrites en relation avec la figure 4A.

En outre, le dispositif de téléchargement TEL comprend au moins deux interfaces réseau COM1, COM2 adaptées pour accéder à un réseau de données et transmettre des données sur ce réseau. Chaque interface réseau COM1, COM2 est spécifique au réseau d'accès auquel elle permet d'accéder. Le dispositif de téléchargement TEL comprend également des tables de routage RT configurées pour rediriger une requête de téléchargement vers une interface réseau COM1 ou COM2 en fonction de l'adresse IP de destination comprise dans la requête.

La figure 5 illustre un dispositif DISP de fourniture d'une information de téléchargement multi-chemins d'un contenu audiovisuel selon un mode particulier de réalisation de l'invention selon l'un quelconque des modes particuliers de réalisation de l'invention décrits précédemment.

Selon un mode particulier de réalisation de l'invention, le dispositif DISP a l'architecture classique d'un ordinateur et comprend notamment une mémoire MEM5, une unité de traitement UT5, équipée par exemple d'un processeur PROC5, et pilotée par le programme d'ordinateur PG5 stocké en mémoire MEM5. Le programme d'ordinateur PG5 comprend des instructions pour mettre en oeuvre les étapes du procédé de fourniture d'une information de téléchargement multi-chemins d'un contenu audiovisuel tel que décrit précédemment, lorsque le programme est exécuté par le processeur PROC5.

A l'initialisation, les instructions de code du programme d'ordinateur PG5 sont par exemple chargées dans une mémoire RAM avant d'être exécutées par le processeur PROC5. Le processeur PROC5 de l'unité de traitement UT5 met notamment en oeuvre les étapes du procédé de fourniture d'une information de téléchargement multi-chemins d'un contenu audiovisuel décrit en relation avec la figure 3A selon les instructions du programme d'ordinateur PG5.

Le dispositif DISP comprend également une interface de communication COM5 permettant au dispositif de communiquer via le réseau de données RES et notamment de transmettre le fichier de description du contenu audiovisuel. Selon un mode particulier de réalisation de l'invention, l'interface de communication COM5 permet également au dispositif de transmettre des informations de répartition à un dispositif de téléchargement.

Selon un mode particulier de réalisation de l'invention, le dispositif DISP décrit précédemment est compris dans un serveur de distribution de contenu SERV1.

La figure 6 illustre un dispositif DISP6 de fourniture d'une information de répartition de requêtes de téléchargement d'un contenu audiovisuel selon l'un quelconque des modes particuliers de réalisation de l'invention décrits précédemment.

Selon un mode particulier de réalisation de l'invention, le dispositif DISP6 a l'architecture classique d'un ordinateur et comprend notamment une mémoire MEM6, une unité de traitement UT6, équipée par exemple d'un processeur PROC6, et pilotée par le programme d'ordinateur PG6 stocké en mémoire MEM6. Le programme d'ordinateur PG6 comprend des instructions pour mettre en oeuvre les étapes du procédé de fourniture d'une information de de répartition de requêtes de téléchargement tel que décrit précédemment, lorsque le programme est exécuté par le processeur PROC6.

A l'initialisation, les instructions de code du programme d'ordinateur PG6 sont par exemple chargées dans une mémoire RAM avant d'être exécutées par le processeur PROC6. Le processeur PROC6 de l'unité de traitement UT6 met notamment en oeuvre les étapes du procédé de fourniture d'une information de répartition de requêtes de téléchargement décrit en relation avec l'une quelconque des figures 3B ou 3C selon les instructions du programme d'ordinateur PG6.

Le dispositif DISP6 comprend également une interface de communication COM6 permettant au dispositif de communiquer via le réseau de données RES et notamment de transmettre des informations de répartition à un dispositif de téléchargement.

Selon un mode particulier de réalisation de l'invention, le dispositif DISP6 décrit précédemment est compris dans un équipement EQ1 du réseau de données, tel que représenté sur les figures 1A et 1B.

## Revendications

1. Procédé de téléchargement d'un contenu audiovisuel depuis un réseau de données, mis en oeuvre par un terminal, et comprenant les étapes suivantes:
- réception (21) d'un fichier de description décrivant un découpage du contenu audiovisuel en un ensemble de segments, le fichier de description comprenant au moins deux informations représentatives respectivement de deux chemins de téléchargement des segments, lesdits deux chemins de téléchargement étant des chemins réseau par lesquels lesdits segments transitent pour aller d'un serveur de distribution du contenu audiovisuel vers ledit terminal, lesdits chemins réseau comprenant notamment une URL permettant d'accéder audit serveur de distribution, chaque information représentative d'un chemin de téléchargement étant associée à une interface réseau, au moins deux interfaces réseau étant distinctes,
- obtention (22, 26) d'au moins une information de répartition de requêtes de téléchargement des segments par interface réseau indiquant pour chaque interface réseau une proportion des requêtes de téléchargement des segments à télécharger *via* chaque interface réseau,
le procédé est **caractérisé en ce que** ladite au moins une information de répartition de requêtes de téléchargement des segments par interface réseau est obtenue en provenance d'un équipement du réseau de données et/ou comprise dans le fichier de description reçu, et le procédé comprend les étapes suivantes:
- pour au moins un segment du contenu audiovisuel à télécharger:
- sélection (23) d'une interface réseau du terminal parmi les interfaces réseau associées aux chemins de téléchargement comprises dans le fichier de description, en fonction de l'information de répartition de requêtes obtenue,
- envoi (24) d'une requête de téléchargement dudit segment via l'interface réseau sélectionnée.

2. Procédé de téléchargement d'un contenu audiovisuel selon la revendication 1, dans lequel les au moins deux informations représentatives respectivement de deux chemins de téléchargement sont comprises respectivement dans un champ "BaseURL" du fichier de description selon le standard MPEG-DASH.

3. Procédé de téléchargement d'un contenu audiovisuel selon la revendication 2, dans lequel l'information de répartition des requêtes de téléchargement des segments par interface réseau est un paramètre d'un champ "BaseURL" du fichier de description reçu.

4. Procédé de téléchargement d'un contenu audiovisuel selon la revendication 2, dans lequel l'information de répartition des requêtes de téléchargement des segments par interface réseau est représentée pour chaque segment par une liste d'intervalles d'octets du contenu audiovisuel, chaque intervalle étant associé à un chemin de téléchargement.

5. Procédé de téléchargement d'un contenu audiovisuel selon la revendication 1, dans lequel l'information de répartition des requêtes de téléchargement des segments par interface réseau est obtenue via un échange de messages entre un serveur du réseau de données et le terminal selon le mécanisme SAND (Server And Network Assisted DASH) du standard MPEG-DASH.

6. Dispositif de téléchargement d'un contenu audiovisuel depuis un réseau de données, comprenant un processeur configuré pour:
- recevoir (STRM) un fichier de description décrivant un découpage du contenu audiovisuel en un ensemble de segments, le fichier de description comprenant au moins deux informations représentatives respectivement de deux chemins de téléchargement des segments, lesdits deux chemins de téléchargement étant des chemins réseau par lesquels lesdits segments transitent pour aller d'un serveur de distribution du contenu audiovisuel vers ledit terminal, lesdits chemins réseau comprenant notamment une URL permettant d'accéder audit serveur de distribution, chaque information représentative d'un chemin de téléchargement étant associée à une interface réseau, au moins deux interfaces réseau étant distinctes,
- obtenir (UT, COM) au moins une information de répartition des requêtes de téléchargement des segments par interface réseau indiquant pour chaque interface réseau une proportion des requêtes de téléchargement des segments à télécharger *via* chaque interface réseau,
le dispositif est **caractérisé en ce que** ladite au moins une information de répartition de requêtes de téléchargement des segments par interface réseau est obtenue en provenance d'un équipement du réseau de données et/ou comprise dans le fichier de description reçu,
et le processeur est configuré pour:
- pour au moins un segment du contenu audiovisuel à télécharger:
- sélectionner (MTPH), en fonction de l'information de répartition des requêtes de téléchargement obtenue et des au moins deux informations représentatives respectivement de deux chemins de téléchargement des segments, une interface réseau via laquelle une requête de téléchargement dudit segment est destinée à être émise,
- transmettre (COM) ladite requête de téléchargement à un dispositif de transmission (PAS) adapté pour émettre la requête de téléchargement via l'interface réseau sélectionnée (COM1, COM2).

7. Dispositif de téléchargement d'un contenu audiovisuel selon la revendication 6, comprenant en outre le dispositif de transmission et au moins deux interfaces réseau adaptées pour recevoir et émettre des données depuis et vers le réseau de données.

8. Terminal comprenant un dispositif de téléchargement selon l'une quelconque des revendications 6 ou 7.

9. Procédé de fourniture d'une information de téléchargement multi-chemins d'un contenu audiovisuel découpé en segments, le procédé de fourniture est **caractérisé en ce qu'**il comprend les étapes suivantes:
- génération (30) d'un fichier de description dudit contenu audiovisuel, comprenant:
• au moins deux informations représentatives respectivement de deux chemins de téléchargement des segments, lesdits deux chemins de téléchargement étant des chemins réseau par lesquels lesdits segments transitent pour aller d'un serveur de distribution du contenu audiovisuel vers ledit terminal, lesdits chemins réseau comprenant notamment une URL permettant d'accéder audit serveur de distribution, chaque information représentative d'un chemin de téléchargement étant associée à une interface réseau, au moins deux interfaces réseau étant distinctes,
• au moins une information de répartition de requêtes de téléchargement indiquant pour chaque interface réseau une proportion des requêtes de téléchargement des segments à télécharger *via* chaque interface réseau, de sorte que les au moins deux informations représentatives de deux chemins de téléchargement des segments permettent à un terminal de sélectionner, en fonction de ladite information de répartition de requêtes de téléchargement, une interface réseau via laquelle une requête de téléchargement d'un segment est destinée à être émise par ledit terminal, ladite au moins une information de répartition étant déterminée en fonction d'informations d'utilisation de ressources réseau et de charge obtenue en provenance d'équipements du réseau,
- envoi (33) dudit fichier de description audit terminal.

10. Serveur (SRV1) de distribution d'un contenu audiovisuel découpé en segments à un terminal via un réseau de données (RES), le serveur de distribution est **caractérisé en ce qu'**il comprend un processeur configuré pour :
- générer un fichier de description comprenant:
• au moins deux informations représentatives respectivement de deux chemins de téléchargement des segments, lesdits deux chemins de téléchargement étant des chemins réseau par lesquels lesdits segments transitent pour aller du serveur de distribution du contenu audiovisuel vers ledit terminal, lesdits chemins de téléchargement comprenant notamment une URL permettant d'accéder audit serveur de distribution, chaque information représentative d'un chemin de téléchargement étant associée à une interface réseau, au moins deux interfaces réseau étant distinctes,
• - déterminer, en fonction d'informations d'utilisation de ressources réseau et de charge obtenues en provenance d'équipements du réseau :au moins une information de répartition de requêtes de téléchargement indiquant pour chaque interface réseau une proportion des requêtes de téléchargement des segments à télécharger *via* chaque interface réseau,
- insérer la au moins une information de répartition de téléchargement dans le fichier de description,
- transmettre le fichier de description au terminal,
- les au moins deux informations représentatives de deux chemins de téléchargement des segments permettant au terminal de sélectionner, en fonction de ladite information de répartition de requêtes de téléchargement, une interface réseau via laquelle une requête de téléchargement d'un segment est destinée à être émise par ledit terminal.

11. Programme d'ordinateur comportant des instructions pour la mise en oeuvre du procédé de téléchargement selon l'une quelconque des revendications 1 à 5, lorsque le programme est exécuté par un processeur.

## Patentansprüche

1. Verfahren zum Herunterladen eines audiovisuellen Inhalts von einem Datennetzwerk, das von einem Endgerät durchgeführt wird und die folgenden Schritte enthält:
- Empfang (21) einer Beschreibungsdatei, die eine Aufgliederung des audiovisuellen Inhalts in eine Einheit von Segmenten beschreibt, wobei die Beschreibungsdatei mindestens zwei Informationen enthält, die für zwei Herunterladepfade der Segmente repräsentativ sind, wobei die zwei Herunterladepfade Netzwerkpfade sind, die die Segmente durchlaufen, um von einem Ausgabeserver des audiovisuellen Inhalts zum Endgerät zu gelangen, wobei die Netzwerkpfade insbesondere eine URL enthalten, die es ermöglicht, auf den Ausgabeserver zuzugreifen, wobei jede für einen Herunterladepfad repräsentative Information einer Netzwerkschnittstelle zugeordnet ist, wobei mindestens zwei Netzwerkschnittstellen unterschiedlich sind,
- Erhalt (22, 26) mindestens einer Verteilungsinformation von Herunterladeanfragen der Segmente per Netzwerkschnittstelle, die für jede Netzwerkschnittstelle einen Anteil der Herunterladeanfragen der über jede Netzwerkschnittstelle herunterzuladenden Segmente anzeigt,
das Verfahren ist **dadurch gekennzeichnet, dass** die mindestens eine Verteilungsinformation von Herunterladeanfragen der Segmente per Netzwerkschnittstelle von einer Ausrüstung des Datennetzwerks kommend erhalten wird und/oder in der empfangenen Beschreibungsdatei enthalten ist, und das Verfahren enthält die folgenden Schritte:
- für mindestens ein Segment des herunterzuladenden audiovisuellen Inhalts:
- Auswahl (23) einer Netzwerkschnittstelle des Endgeräts unter den den Herunterladepfaden zugeordneten Netzwerkschnittstellen, die in der Beschreibungsdatei enthalten sind, abhängig von der erhaltenen Verteilungsinformation von Anfragen,
- Senden (24) einer Herunterladeanfrage des Segments über die ausgewählte Netzwerkschnittstelle.

2. Verfahren zum Herunterladen eines audiovisuellen Inhalts nach Anspruch 1, wobei die mindestens zwei für zwei Herunterladepfade repräsentativen Informationen je in einem Feld "BaseURL" der Beschreibungsdatei gemäß dem Standard MPEG-DASH enthalten sind.

3. Verfahren zum Herunterladen eines audiovisuellen Inhalts nach Anspruch 2, wobei die Verteilungsinformation der Herunterladeanfragen der Segmente per Netzwerkschnittstelle ein Parameter eines Felds "BaseURL" der empfangenen Beschreibungsdatei ist.

4. Verfahren zum Herunterladen eines audiovisuellen Inhalts nach Anspruch 2, wobei die Verteilungsinformation der Herunterladeanfragen der Segmente per Netzwerkschnittstelle für jedes Segment durch eine Liste von Byteintervallen des audiovisuellen Inhalts dargestellt wird, wobei jedes Intervall einem Herunterladepfad zugeordnet ist.

5. Verfahren zum Herunterladen eines audiovisuellen Inhalts nach Anspruch 1, wobei die Verteilungsinformation der Herunterladeanfragen der Segmente per Netzwerkschnittstelle über einen Austausch von Nachrichten zwischen einem Server des Datennetzwerks und dem Endgerät gemäß dem Mechanismus SAND (Server And Network Assisted DASH) des Standards MPEG-DASH erhalten wird.

6. Vorrichtung zum Herunterladen eines audiovisuellen Inhalts von einem Datennetzwerk, die einen Prozessor enthält, der konfiguriert ist, um:
- eine Beschreibungsdatei zu empfangen (STRM), die eine Aufgliederung des audiovisuellen Inhalts in eine Einheit von Segmenten beschreibt, wobei die Beschreibungsdatei mindestens zwei Informationen enthält, die für zwei Herunterladepfade der Segmente repräsentativ sind, wobei die zwei Herunterladepfade Netzwerkpfade sind, die die Segmente durchlaufen, um von einem Ausgabeserver des audiovisuellen Inhalts zum Endgerät zu gelangen, wobei die Netzwerkpfade insbesondere eine URL enthalten, die es ermöglicht, auf den Ausgabeserver zuzugreifen, wobei jede für einen Herunterladepfad repräsentative Information einer Netzwerkschnittstelle zugeordnet ist, wobei mindestens zwei Netzwerkschnittstellen unterschiedlich sind,
- mindestens eine Verteilungsinformation der Herunterladeanfragen der Segmente per Netzwerkschnittstelle zu erhalten (UT, COM), die für jede Netzwerkschnittstelle einen Anteil der Herunterladeanfragen der über jede Netzwerkschnittstelle herunterzuladenden Segmente anzeigt,
die Vorrichtung ist **dadurch gekennzeichnet, dass** die mindestens eine Verteilungsinformation von Herunterladeanfragen der Segmente per Netzwerkschnittstelle von einer Ausrüstung des Datennetzwerks kommend erhalten wird und/oder in der empfangenen Beschreibungsdatei enthalten ist,
und der Prozessor ist konfiguriert, um:
- für mindestens ein Segment des herunterzuladenden audiovisuellen Inhalts:
- abhängig von der erhaltenen Verteilungsinformation der Herunterladeanfragen und den mindestens zwei Informationen, die für zwei Herunterladepfade der Segmente repräsentativ sind, eine Netzwerkschnittstelle auszuwählen (MTPH), über die eine Herunterladeanfrage des Segments gesendet werden soll,
- die Herunterladeanfrage an eine Übertragungsvorrichtung (PAS) zu übertragen (COM), die geeignet ist, die Herunterladeanfrage über die ausgewählte Netzwerkschnittstelle (COM1, COM2) zu senden.

7. Vorrichtung zum Herunterladen eines audiovisuellen Inhalts nach Anspruch 6, die außerdem die Übertragungsvorrichtung und mindestens zwei Netzwerkschnittstellen enthält, die geeignet sind, Daten vom und zum Datennetzwerk zu empfangen und zu senden.

8. Endgerät, das eine Herunterladevorrichtung nach einem der Ansprüche 6 oder 7 enthält.

9. Verfahren zur Bereitstellung einer Mehrpfade-Herunterladeinformation eines in Segmente aufgeteilten audiovisuellen Inhalts, das Bereitstellungsverfahren ist **dadurch gekennzeichnet, dass** es die folgenden Schritte enthält:
- Generierung (30) einer Beschreibungsdatei des audiovisuellen Inhalts, die enthält:
• mindestens zwei Informationen, die für zwei Herunterladepfade der Segmente repräsentativ sind, wobei die zwei Herunterladepfade Netzwerkpfade sind, die die Segmente durchlaufen, um von einem Ausgabeserver des audiovisuellen Inhalts zum Endgerät zu gelangen, wobei die Netzwerkpfade insbesondere eine URL enthalten, die es ermöglicht, auf den Ausgabeserver zuzugreifen, wobei jede für einen Herunterladepfad repräsentative Information einer Netzwerkschnittstelle zugeordnet ist, wobei mindestens zwei Netzwerkschnittstellen unterschiedlich sind,
• mindestens eine Verteilungsinformation von Herunterladeanfragen, die für jede Netzwerkschnittstelle einen Anteil der Herunterladeanfragen der über jede Netzwerkschnittstelle herunterzuladenden Segmente anzeigt, so dass die mindestens zwei für zwei Herunterladepfade der Segmente repräsentativem Informationen es einem Endgerät erlauben, abhängig von der Verteilungsinformation von Herunterladeanfragen eine Netzwerkschnittstelle auszuwählen, über die eine Herunterladeanfrage eines Segments vom Endgerät gesendet werden soll, wobei die mindestens eine Verteilungsinformation abhängig von Informationen über die Nutzung von Netzwerkressourcen und Last bestimmt wird, die von Ausrüstungen des Netzwerks kommend erhalten werden,
- Senden (33) der Beschreibungsdatei an das Endgerät.

10. Server (SRV1) zur Verteilung eines in Segmente aufgeteilten audiovisuellen Inhalts an ein Endgerät über ein Datennetzwerk (RES), der Ausgabeserver ist **dadurch gekennzeichnet, dass** er einen Prozessor enthält, der konfiguriert ist, um:
- eine Beschreibungsdatei zu generieren, die enthält:
• mindestens zwei Informationen, die für zwei Herunterladepfade der Segmente repräsentativ sind, wobei die zwei Herunterladepfade Netzwerkpfade sind, die die Segmente durchlaufen, um vom Ausgabeserver des audiovisuellen Inhalts zum Endgerät zu gelangen, wobei die Herunterladepfade insbesondere eine URL enthalten, die es ermöglicht, auf den Ausgabeserver zuzugreifen, wobei jede für einen Herunterladepfad repräsentative Information einer Netzwerkschnittstelle zugeordnet ist, wobei mindestens zwei Netzwerkschnittstellen unterschiedlich sind,
• abhängig von Informationen über die Nutzung von Netzwerkressourcen und Last, die von Ausrüstungen des Netzwerks kommend erhalten werden, mindestens eine Verteilungsinformation von Herunterladeanfragen zu bestimmen, die für jede Netzwerkschnittstelle einen Anteil der Herunterladeanfragen der über jede Netzwerkschnittstelle herunterzuladenden Segmente anzeigt,
- die mindestens eine Herunterlade-Verteilungsinformation in die Beschreibungsdatei einzufügen,
- die Beschreibungsdatei an das Endgerät zu übertragen,
- wobei die mindestens zwei für zwei Herunterladepfade der Segmente repräsentativen Informationen es dem Endgerät erlauben, abhängig von der Verteilungsinformation von Herunterladeanfragen eine Netzwerkschnittstelle auszuwählen, über die eine Herunterladeanfrage eines Segments vom Endgerät gesendet werden soll.

11. Computerprogramm, das Anweisungen zur Durchführung des Herunterladeverfahrens nach einem der Ansprüche 1 bis 5 aufweist, wenn das Programm von einem Prozessor ausgeführt wird.

## Claims

1. Method for downloading an audiovisual content from a data network, implemented by a terminal, and comprising the following steps:
- reception (21) of a description file describing a subdivision of the audiovisual content into a set of segments, the description file comprising at least two items of information representative respectively of two segment download paths, said two download paths being network paths by which said segments transit to go from an audiovisual content distribution server to said terminal, said network paths comprising in particular a URL allowing access to said distribution server, each item of information representative of a download path being associated with a network interface, at least two network interfaces being distinct,
- obtaining (22, 26) of at least one item of information on distribution of segment download requests by network interface indicating, for each network interface, a proportion of the segment download requests to be downloaded *via* each network interface,
the method is **characterized in that** said at least one item of information on distribution of segment download requests by network interface is obtained from an item of equipment of the data network and/or included in the description file received, and the method comprises the following steps:
- for at least one segment of the audiovisual content to be downloaded:
- selection (23) of a network interface of the terminal out of the network interfaces associated with the download paths included in the description file, based on the request distribution information obtained,
- sending (24) of a request to download said segment via the selected network interface.

2. Method for downloading an audiovisual content according to Claim 1, wherein the at least two items of information representative respectively of two download paths are included respectively in a "baseURL" field of the description file according to the MPEG-DASH standard.

3. Method for downloading an audiovisual content according to Claim 2, wherein the item of information on distribution of the segment download requests by network interface is a parameter of a "baseURL" field of the description file received.

4. Method for downloading an audiovisual content according to Claim 2, wherein the item of information on distribution of the segment download requests by network interface is represented for each segment by a list of intervals of octets of the audiovisual content, each interval being associated with a download path.

5. Method for downloading an audiovisual content according to Claim 1, wherein the item of information on distribution of the segment download requests by network interface is obtained via an exchange of messages between a server of the data network and the terminal according to the SAND (Server And Network Assisted DASH) mechanism of the MPEG-DASH standard.

6. Device for downloading an audiovisual content from a data network, comprising a processor configured to:
- receive(STRM) a description file describing a subdivision of the audiovisual content into a set of segments, the description file comprising at least two items of information representative respectively of two segment download paths, said two download paths being network paths by which said segments transit to go from an audiovisual content distribution server to said terminal, said network paths comprising in particular a URL allowing access to said distribution server, each item of information representative of a download path being associated with a network interface, at least two network interfaces being distinct,
- obtaining (UT, COM) at least one item of information on distribution of the segment download requests by network interface indicating, for each network interface, a proportion of the segment download requests to be downloaded *via* each network interface,
the device is **characterized in that** said at least one item of information on distribution of segment download requests by network interface is obtained from an item of equipment of the data network and/or included in the description file received, and the processor is configured to:
- for at least one segment of the audiovisual content to be downloaded:
- select (MTPH), based on the item of information on distribution of the download requests obtained and of the at least two items of information representative respectively of two segment download paths, a network interface via which a request to download said segment is intended to be transmitted,
- transmit (COM) said download request to a transmission device (PAS) suitable for transmitting the download request via the selected network interface (COM1, COM2).

7. Device for downloading an audiovisual content according to Claim 6, further comprising the transmission device and at least two network interfaces suitable for receiving and transmitting data from and to the data network.

8. Terminal comprising a downloading device according to either of Claims 6 and 7.

9. Method for supplying an item of information on multi-path download of an audiovisual content subdivided into segments, the provision method is **characterized in that** it comprises the following steps:
- generation (30) of a description file of said audiovisual content, comprising:
• at least two items of information representative respectively of two segment download paths, said two download paths being network paths by which said segments transit to go from an audiovisual content distribution server to said terminal, said network paths comprising in particular a URL allowing access to said distribution server, each item of information representative of a download path being associated with a network interface, at least two network interfaces being distinct,
• at least one item of information on distribution of download requests indicating, for each network interface, a proportion of the segment download requests to be downloaded *via* each network interface, such that the at least two items of information representative of two segment download paths allow a terminal to select, based on said item of information on distribution of download requests, a network interface via which a segment download request is intended to be transmitted by said terminal, said at least one item of information on distribution being determined based on the information on the use of network resources and load obtained from network equipment,
- sending (33) of said description file to said terminal.

10. Server (SRV1) for distributing an audiovisual content subdivided into segments to a terminal via a data network (RES), the distribution server is **characterized in that** it comprises a processor configured to:
- generate a description file comprising:
• at least two items of information representative respectively of two segment download paths, said two download paths being network paths by which said segments transit to go from the audiovisual content distribution server to said terminal, said download paths comprising in particular a URL allowing access to said distribution server, each item of information representative of a download path being associated with a network interface, at least two network interfaces being distinct,
• determine, based on information on use of network resources and on load obtained from equipment of the network: at least one item of information on distribution of download requests indicating, for each network interface, a proportion of the segment download requests to be downloaded *via* each network interface,
- insert the at least one item of download distribution information into the description file,
- transmit the description file to the terminal,
- the at least two items of information representative of two segment download paths allowing the terminal to select, based on said item of information on distribution of download requests, a network interface via which a segment download request is intended to be transmitted by said terminal.

11. Computer program comprising instructions for implementing the downloading method according to any one of Claims 1 to 5, when the program is run by a processor.
